Europäisches Patentamt

(19) European Patent Office

Office européen des brevets

(11) Publication number : **0 248 518 B1**

## (12) EUROPEAN PATENT SPECIFICATION

(45) Date of publication of patent specification :
13.11.91 Bulletin 91/46

(51) Int. Cl.[5] : **C22B 3/10**, // C22B15/00, C22B23/00

(21) Application number : 87303580.2

(22) Date of filing : 23.04.87

(54) Separation of nickel from copper in autoclave.

(30) Priority : 24.04.86 US 855897

(43) Date of publication of application :
09.12.87 Bulletin 87/50

(45) Publication of the grant of the patent :
13.11.91 Bulletin 91/46

(84) Designated Contracting States :
BE DE ES FR GB GR

(56) References cited :
WO-A-85/01748
CA-A- 1 193 107
FR-A- 367 717
FR-A- 441 785
FR-A- 2 146 299
FR-A- 2 273 875
US-A- 3 085 054
US-A- 3 819 801
US-A- 3 880 653
US-A- 3 975 189
US-A- 3 981 962
US-A- 4 260 588
US-A- 4 384 940
US-A- 4 435 368

(56) References cited :
HYDROMETALLURGY, vol. 10, no. 3, June 1983, pages 359-366, Elsevier Science Publishers B.V., Amsterdam, NL; R.C. HUBLI et al.: "A ferrous chloride-oxygen leach process for nickel-copper sulphide concentrates"
HYDROMETALLURGY, vol. 15, no. 1, October 1985, pages 25-32, Elsevier Science Publishers B.V., Amsterdam, NL; T.K. MUKHERJEE et al.: "A cupric chloride-oxygen leach process for a nickel-copper sulphide concentrate"

(73) Proprietor : FALCONBRIDGE LIMITED
P.O. Box 40 Commerce Court West
Toronto Ontario, M5L 1B4 (CA)

(72) Inventor : Thomassen, Thomas
N-4780 Brekkesto
Brekkesto (NO)
Inventor : Kostol, Carl
Auglandskollen 9
N-4620 Vagsbygd (NO)
Inventor : Zachariansen, Hans
Gransangerveien 4
N-4620 Vagsbygd (NO)
Inventor : Stensholt, Erling
Kvernstien 14
N-4630 Sogne (NO)

(74) Representative : Foster, David Martyn et al
MATHISEN MACARA & CO. The Coach House
6-8 Swakeleys Road
Ickenham Uxbridge UB10 8BZ (GB)

## Description

This invention relates to the hydrometallurgical treatment of solid particles selected from sulphidic matte and alloys, more particularly to the selective leaching of nickel from predominantly copper and nickel-containing sulphidic matte and alloys, and subsequently to recovering copper and precious metals from the residue.

Mattes are the products of smelting sulphidic ores. The sulphidic ores and concentrates usually contain nickel, cobalt, iron, copper, other non-ferrous metals and some precious metals. During the smelting process, which often includes a converting step as well, most of the iron and silicate-containing gangue is slagged off, and the underlaying matte contains most of the copper, nickel and cobalt originally present in the ore and concentrate, mainly in the form of sulphides together with minor amounts of oxides, some retained iron and other non-ferrous metals as impurities, and all the precious metals initially combined with copper and nickel in the concentrate or ore.

The present invention is directed to extracting copper, nickel and precious metals from sulphidic matte and alloy particles by hydrometallurgical methods solubilizing nickel, and cobalt if present, selectively as chloride and retaining copper and precious metals in the form of sulphides in the residue. The recovery of copper and precious metals is carried out by conventional means and processes subsequently, and do not form part of the present process description.

Chlorine leaching of sulphidic particles in acidic chloride solutions at atmospheric pressure is described in U.S. patents 3,880,653 and 3,975,189 (inventor Hougen). The above process is carried out in two stages: In the first stage the ground matte slurried in a chloride ion bearing solution, is leached with chlorine gas at a redox potential range of 200 to 500 mV measured against SCE (saturated calomel electrode), which is maintained by controlling the feeding of both the solids and the chlorine gas to the slurry. In the second stage, untreated nickel rich sulphides are added to the agitated slurry obtained in the first stage to preferentially recover nickel into the solution and precipitate copper as sulphide. The second stage is often referred to as a cementation step. In the atmospheric chlorine leaching at the required redox potential range, a large portion of the nickel contained in the matte will dissolve and also a small portion of the copper. The residue in the first stage of the leaching is composed of partially leached sulphides and retained elemental sulphur. In the second stage excess nickel bearing sulphides will precipitate or cement out the copper in solution as sulphide, with more nickel going into solution as chloride. The precipitation is enhanced by the reaction with elemental sulphur, which is also present in the slurry. Ideally in the second leaching stage of the process the copper is cemented out while all the nickel in the solids go into solution. In practice, however, the incompletely leached particles and the freshly added nickel rich sulphide particles become coated with copper sulphide and thus the dissolution process is slowed down. Hence the total extraction of nickel into the solution and elimination of copper from the solution are not attained in commercially economical residence times and temperatures of this atmospheric leaching process.

Prior processes have attempted to complete the selective dissolution process of nickel from matte by the use of autoclave leaching, thereby increasing the reaction temperature and hence the rate of the reaction. The process of U.S. patent 3,652,265 (Marschik et al.) utilizes an oxidative acidic pressure leach by treating ground matte and sulphur together with oxygen injection in an autoclave. This process, however, produces sulphuric acid and the nickel is dissolved in the form of sulphates, together with substantial amounts of highly soluble copper sulphates.

Another process is described in U.S. patent 4,384,940 (inventors D.L. Jones et al.) which subjects nickel, cobalt and iron containing sulphidic matte slurried in hydrochloric acid to oxygen-pressure leaching in an autoclave, and the separated residue is subsequently chlorine leached under atmospheric condition. Any copper present initially in the matte is co-dissolved with the nickel, and requires separation by other purification steps subsequently.

Yet another process utilizing pressure leaching a copper-nickel containing matte for selective extraction of nickel is described in U.S. 4,323,541 under oxidative conditions; this process, however, is directed totally to sulphate extractive process technology.

It is the object of the present invention to selectively leach most of the nickel, and cobalt if present, contained in copper and nickel bearing sulphidic matte and similar sulphidic alloy particles in a chloride solution, and subsequently to recover the nickel and cobalt from the separated nickel containing solution by electrowinning, solvent extraction or other known methods; while retaining substantially all the copper and precious metals in the residue, for treatment in separate copper and precious metal recovery process steps.

According to the invention there is provided a process for the separation of nickel from copper contained in solid particles of a copper- and nickel-containing ground sulphidic matte or sulphidic alloy, wherein said particles, after being slurried in an acidic solution, are chlorine leached at ambient atmospheric pressure to provide a chlorine leached slurry of sulphidic particles in a chloride solution, additional unleached solid particles of cop-

2

per- and nickel-containing ground sulphidic matte or sulphidic alloy are added to the chlorine leached slurry to cement out copper dissolved in the chloride solution, the copper depleted chloride solution is separated and the residue treated for copper recovery, characterized in that the process includes the step of subjecting the chlorine leached slurry to a second leaching conducted in an autoclave at over-atmospheric pressure, in the presence of chlorine gas and air, at a pH less than 4 and at a temperature higher than 110°C, providing nickel impoverished copper sulphide containing particles slurried in a nickel enriched chloride solution.

Preferably, the separated chloride solution is treated for nickel recovery.

In one embodiment of this process the second chlorine leaching step is conducted before the cementation step, the fresh sulphidic particles being added in the cementation step to the nickel-enriched chloride solution obtained by the second chlorine leaching to cement out at atmospheric pressure any copper co-dissolved with nickel in said solution.

In another embodiment of the process the cementation of dissolved copper in the chloride solution by fresh sulphidic particle addition is conducted in an autoclave at over-atmospheric pressure and at a temperature higher than 110°C.

According to one feature of the process the second leaching at over-atmospheric pressure in an autoclave is conducted in the presence of chlorine gas.

In yet another embodiment of the process the second leaching at over-atmospheric pressure is conducted with chlorine and oxygen injections into the autoclave.

In yet another embodiment of the process the second chlorine leaching at over-atmospheric pressure is followed by cementation of copper onto fresh sulphidic particles added to the nickel-enriched chloride solution slurry from the second chlorine leaching step, said second chlorine leaching and said cementation being conducted in separate autoclaves.

The invention will now be described with reference to preferred embodiments and the accompanying drawings, in which:

Figures 1/a and 1/b show plots of nickel leach rate studies at above atmospheric pressure;

Figure 2 shows a schematic flow diagram of a conventional atmospheric leaching process; and

Figures 3 to 4 show schematic flow diagrams of preferred embodiments of the process in accordance with the invention.

It is the object of most hydrometallurgical processes to convert the valuable metals present in ores, concentrates or heat treated intermediates such as mattes, into a water soluble form and to extract these in a pure form by further treatment steps. If all the valuable metals are dissolved together their respective subsequent separation can however, be very costly. Hence a selective dissolution process such as chlorine leaching of nickel-copper sulphidic mattes and alloys conducted at well controlled redox potentials have great advantages. The different embodiments of the present invention combine the pressure leaching of copper-nickel containing sulphidic matte or sulphidic alloys obtained by smelting, in a chloride ion-containing aqueous slurry in the presence of residual or additionally injected chlorine, with the known methods of atmospheric chlorine leaching of such sulphidic mattes and alloys.

As already discussed above, the selective leaching of matte and other sulphidic alloys aims at combining the maximum dissolution of nickel, and cobalt if present, consistent with minimum copper content in solution, with the substantially complete retention of copper and attendant precious metals in the residue. The objectives of dissolving nickel in the solution and retaining copper in the residue, that is, the separation of these metals, are better obtained at elevated temperatures and pressures. While the improvements may be partially due to faster reaction rates at elevated temperatures, they are also the results of an unexpected, increased differential between the respective solubilities of nickel and copper sulphides at such elevated temperatures. Thus, the process steps embodying the present invention are conducted in an autoclave, and these steps are inserted between the process steps of the conventional atmospheric chlorine leaching process.

The autoclave pressure leaching of the previously chlorine leached sulphidic particles may be conducted directly after the particles have been atmospherically chlorine leached, or optionally after they have already been purified by cementation under atmospheric conditions. In the latter case the autoclave pressure leaching step may be followed by further cementation of dissolved copper onto freshly added ground sulphidic particles, and this further cementation step may be conducted at above atmospheric pressure in an autoclave.

For the purposes of this invention an autoclave is described as a vessel appropriately lined, which can be sealed to withstand above-atmospheric internal pressures with or without gas injection, and simultaneously the contents of the vessel can be heated to temperatures in the region of 100-300°C.

The first two of the following examples are included to show the beneficial effects of utilizing over-atmospheric pressure leaching in selectively extracting nickel contained in copper-nickel matte. Examples 4 to 9 show the various embodiments of the present process wherein the pressure leaching conducted in an autoclave is incorporated at various stages with atmospheric chlorine leaching. These embodiments will be further illustrated by the appropriate flow sheets.

Example 1

Laboratory experiments were conducted to show the improvement in nickel dissolution from ground copper nickel matte when the leaching is conducted at above atmospheric pressure and at elevated temperatures. The leaching experiments were carried out in a 6 litre titanium lined autoclave, having a chlorine atmosphere above the leach solution slurried with the ground matte. The solution at the start of the experiments had the following compositions:

Ni ions 185 g/L
Cu ions 25 g/L

The leach temperature was controlled at $150\pm1°C$; other conditions of the tests are tabulated in TABLE 1 below.

## TABLE 1

| | Wt. of Dry Ground Matte, g | Initial Wt.% of Nickel in Matte | Rate of Chlorine Absorption during Leaching $Cl_2$ g/hr x kg | Duration of Leaching, Hours | Final Redox of Slurry mV | Rate of Nickel Leaching wt% Ni/hr |
|---|---|---|---|---|---|---|
| A | 1760 | 8.50 | 50 | 2 | 322 | 1.2 |
| B | 1870 | 7.45 | 80 | · 2 | 331 | 3.7 |
| C | 1350 | 8.50 | 105 | 1 | 337 | 6.0 |

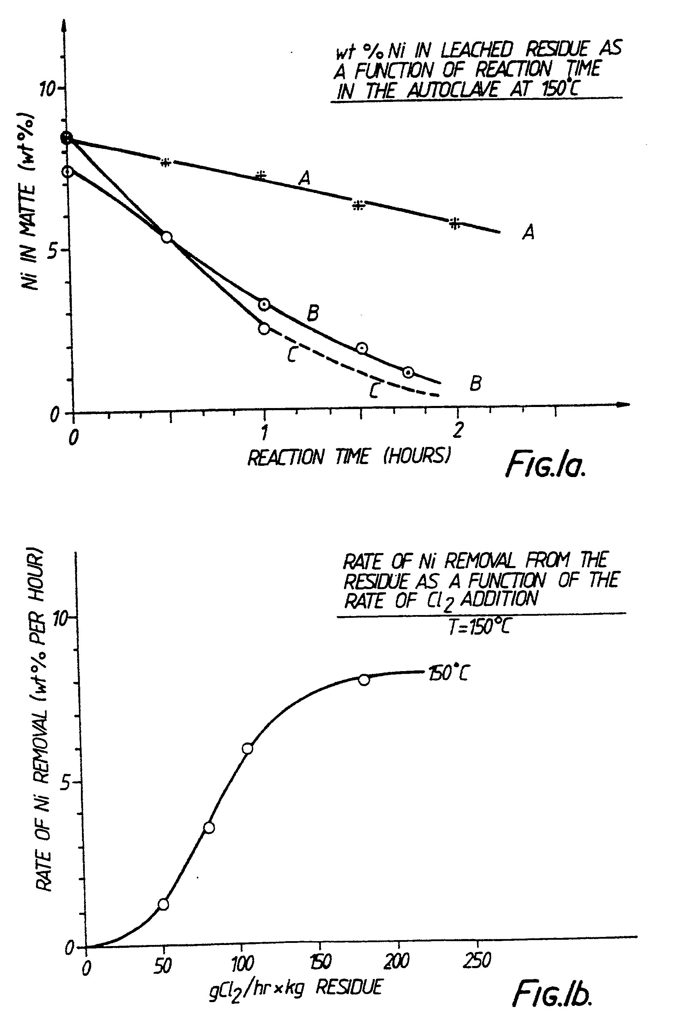

The rate of nickel removal by leaching is shown in Figure 1a where the nickel content of the matte is plotted against the duration of leaching in the tests shown in TABLE 1. Fig. 1b indicates how the amount of nickel dissolved during leaching is effected by the amount of chlorine absorbed during leaching at elevated temperature. The beneficial effects of increased leach temperature and chlorine additions on the nickel dissolution from ground copper-nickel matte are clearly illustrated.

Example 2

Laboratory autoclave leaching tests were conducted for selectively leaching nickel from a copper-nickel matte which was obtained by smelting copper concentrate. The matte was ground, slurried with a solution and leached in an autoclave at 135°C, having a two hour residence time. Chlorine together with air were injected into the autoclave during the leaching and the gas composition in the autoclave above the slurried matte was as follows:

Chlorine 50 vol. %
Oxygen 10 vol. %
Nitrogen 40 vol. %

The slurrying solution had the following initial and final compositions in grams per litre:

TABLE 2A

|  | Total Copper | $Cu^{++}$ | HCl | $Cl^-$ | $SO_4^{--}$ | Total Iron | Nickel | Cobalt |
|---|---|---|---|---|---|---|---|---|
| concentration in grams per litre | | | | | | | | |
| Initial comp | 1 | 1 | 1 | 57 | 50 | 1 | 72 | 1 |
| Final comp. of the end of leaching | 38 | 8 | 17 | 181 | 59 | 3 | 144 | 3 |

The solids fed into the autoclave and leached, were analyzed, and were found to have the following initial and final composition in weight %.

TABLE 2B

|  | Copper | Nickel | Cobalt | Iron | Total Sulphur | Elemental Sulphur $S^O$ |
|---|---|---|---|---|---|---|
| in weight % | | | | | | |
| Feed Composition | 50 | 10 | 1 | 2 | 28 | 0.6 |
| Leach Residue Composition | 55 | 1.4 | 0.2 | 3 | 35 | 4.6 |
| Leached Metal % of Initial amount present | 11% | 86% | 60% | 50% | | |

It can be seen that most of the nickel was leached in the autoclave leaching step but the copper concentration in the solution also increased, and a subsequent cementation step would be required to derive the full benefit of autoclave leaching of copper-nickel matte.

Example 3

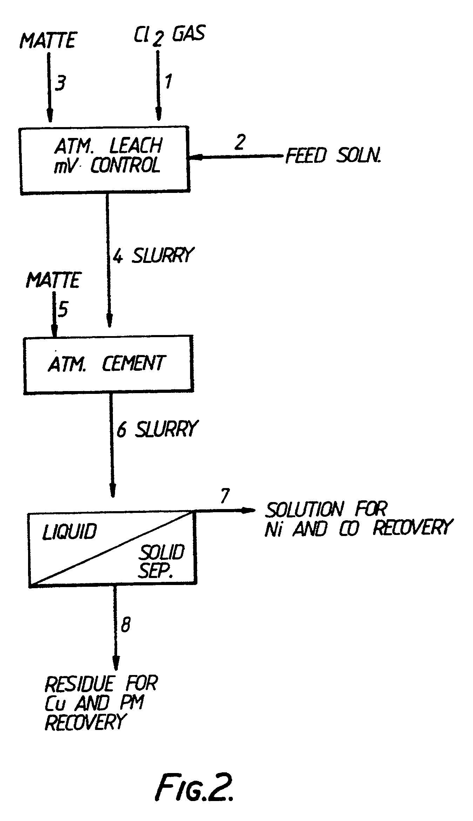

An atmospheric leaching process is shown schematically in Fig. 2 which is conducted according to conventional methods. Ground, untreated matte was fed through line (3) together with chlorine gas (1) and an acidic chloride solution (2) to a vessel at atmospheric pressure. The feeding of matte, and chlorine were coordinated so that the redox potential of the slurry was maintained at 360 to 380 mV, measured against S.C.E. The residence time of the matte was around 3 hours with constant agitation. The slurry temperature was close to the boiling point about 105-110°C. The feed solution was spent nickel electrolyte, but other nickel and copper chloride bearing solutions would serve as well. The feed solution was acidic, containing 2-5g per litre hydrochloric acid.

The leached slurry was transferred (4) to an atmospheric cementation vessel, with fresh untreated matte added through line (5). The duration of the cementation step was around three hours, after which the slurry was removed (6) and subjected to liquid-solid separation. The filtrate or overflow was removed (7) for nickel recovery by electrowinning, solvent extraction or similar known processes. The residue or solids in the underflow was further treated for copper and precious metal recovery by conventional methods.

TABLE 3 summarizes solution and solid compositions including slurries of solids in solution; as fed at various intermediate stages of the process and after the final liquid-solution separation.

It is clear that the initial 39 wt.% nickel content in the matte was considerably reduced and the copper content was increased by the two stage atmospheric leaching process. The nickel content of the residue however was still around 15% and the copper, although increased was only 48.9% in the separated residue, requiring further selective extraction treatment.

## Example 4

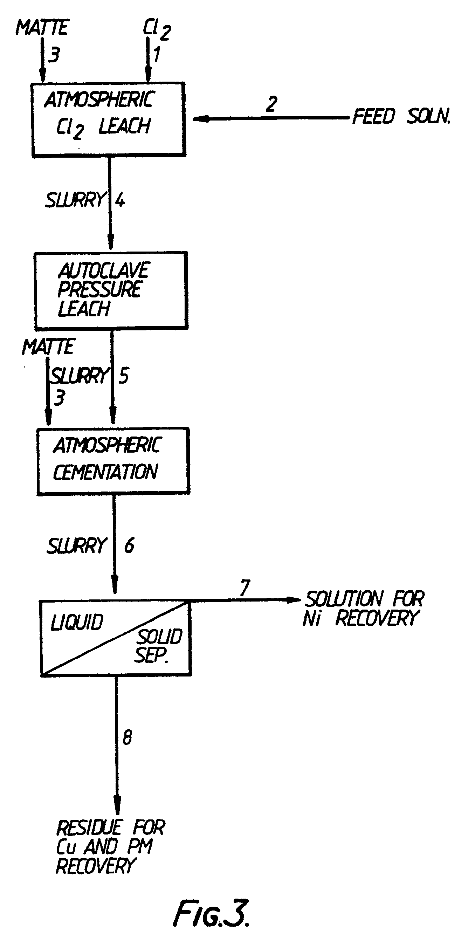

The process described in this example illustrates the selective leaching of nickel from copper-nickel matte with an autoclave pressure leach step incorporated in the process. The first stage of the atmospheric chlorine leach as shown in Example 3 and in Fig. 2, was followed by an autoclave leach and subsequently by an atmospheric cementation process step. The schematic flow sheet is shown in Fig. 3. The slurry from the atmospheric chlorine leach was taken by a line (4) to an autoclave to be pressure leached at 4 atmospheres pressure with agitation for 3 hours and at a temperature range of 140-150°C. The gas phase in the autoclave above the slurry was air. The redox potential of the slurry in the pressure leaching autoclave was found to be in the range of 240-290mV. The pressure leached slurry from the autoclave was fed (5) to an atmospheric cementation vessel with the addition of fresh untreated matte (3). The retention time in the cementation vessel was 1.5 hours; at 70°C, and the redox potential of the slurry ranged between 80-120mV measured against S.C.E.

The composition of the slurries, solutions and solids in the various streams of Fig. 3 are shown in TABLE 4.

It can be seen that the nickel concentration in the residue when obtained by the process of the embodiment depicted in this example is reduced to 5 wt.%, while the copper has increased to 54.1%. The amount of copper retained in the solution to be treated for nickel and cobalt recovery is negligible, and hence requires no further separation treatment.

## Example 5

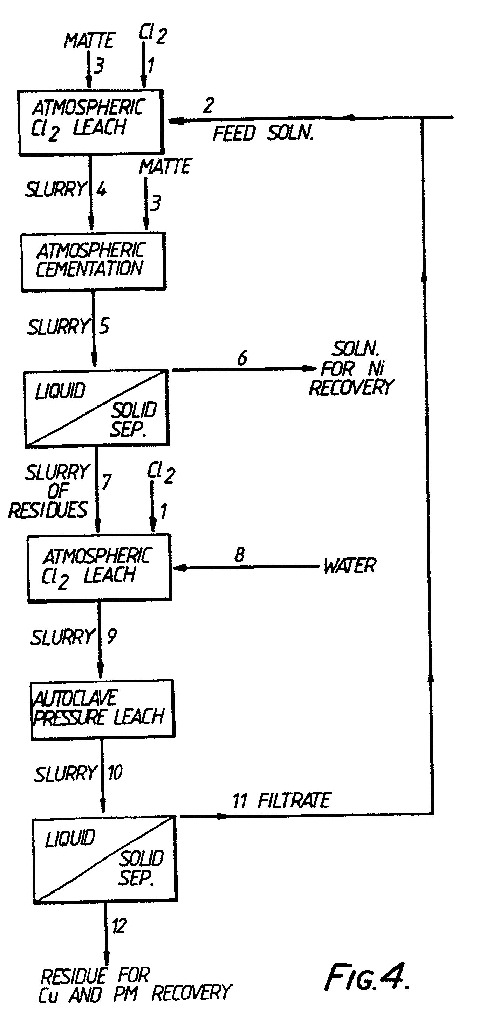

The process of this example is another variation of the embodiment described in Example 4. The matte was subjected to atmospheric chlorine leaching and cementation as has been described in Example 3, and treated in a first liquid solid separation step. The filtrate was treated for nickel recovery in a conventional manner, but as discussed above, the residue still retained 15 wt.% nickel, and hence was treated in a second atmospheric chlorine leach step. The flow sheet of the process of Example 5 is shown in Fig. 4. The thickened slurry of the residue was fed (7) to an atmospheric chlorine leach vessel, with chlorine gas (1) and water (8) additions. The second atmospheric chlorine leach with agitation was conducted at 105°C for a period of 2 hours. The second chlorine leach slurry was fed through line (9) to an autoclave to be pressure leached at 3-4 atmospheres and 150°C for further two hours. The slurry redox potential ranged between 180-200mV measured against S.C.E. The pressure-leach slurry was fed (10) to a liquid-solid separating equipment. The separated filtrate (11) was returned to the first atmospheric leaching vessel through line (2). The separated solids (12), high in copper sulphides, were treated for copper and precious metal recovery.

The compositions of the slurries, solutions and the solids in the respective streams are tabulated in TABLE 5.

It can be seen that the separated residue was substantially depleted of nickel. The filtrate from the first liquid-solid separation step still contained some copper, which could be removed if required by a relatively inexpensive process step before recovering nickel from the solution. The filtrate from the second liquid-solid separation (11) had a relatively high nickel and copper concentration which was utilized by recycling to the first chlorine leach vessel.

## Example 6

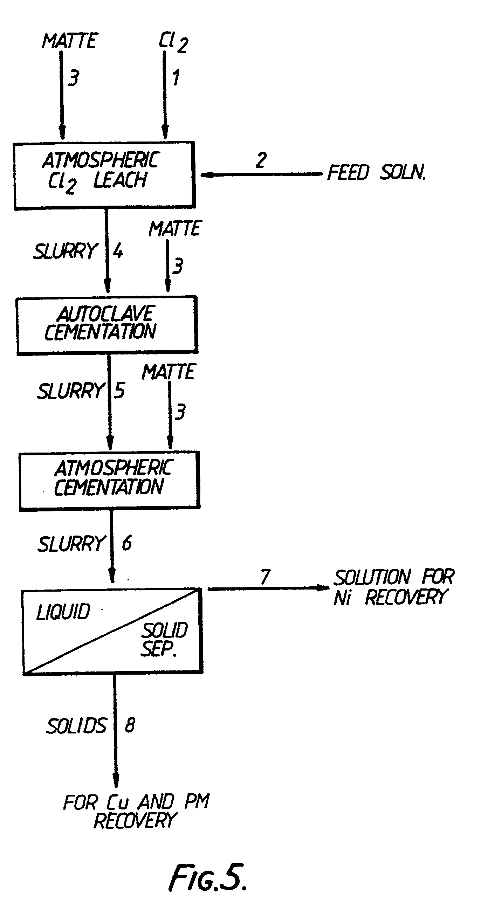

In the embodiment shown in Example 6, the pressure leaching step is conducted between the atmospheric chlorine leaching and the atmospheric cementation steps. The flow sheet of this process is schematically shown in Fig. 5 . The atmospheric leach was carried out shown in the first stage of Example 3, at a temperature range of 105-115°C, and the redox potential being controlled between 340-380 mV against S.C.E., with agitation, and in three hours residence time. The slurry was then fed (4) together with matte (3) to a pressure cementation autoclave. The slurry was agitated in the autoclave with the pressure being held at 4 atmospheres and the temperature between 140-150°C. The slurry residence time was three hours and the redox potential in the autoclave had a range of 230-300 mV measured against S.C.E. The slurry from the autoclave cementation was fed (5) to an atmospheric cementation vessel for a further 1.5 hours residence with matte additions (3) and agitation. The redox potential ranged between 80-120 mV against S.C.E. during the cementation and temperature was 70°C.

The compositions of the various streams of slurries, solids and solutions are shown in TABLE 6, together with matte feed rates to the cementation vessels. It can be seen that the copper content of the solution from the liquid-solid separation stage has a very low copper content and thus could be directly treated for nickel recovery. The separated residue was very high in copper, 55.9 wt.%, and retained only about 6 wt.% of nickel and cobalt in total, which is an economically acceptable degree of separation.

Example 7

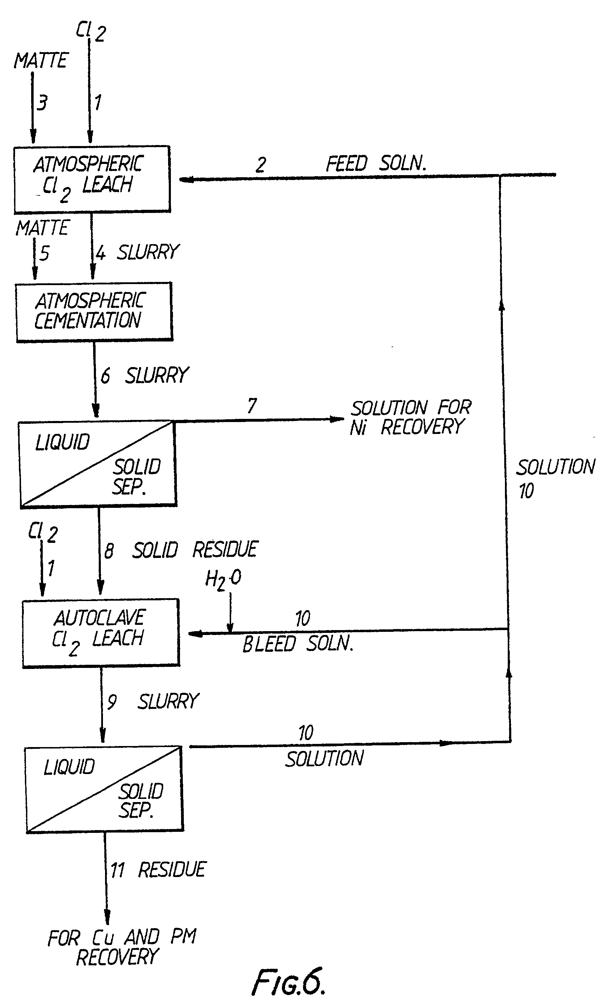

The improved separation of nickel from copper contained in sulphidic matte particles described in this example incorporates an autoclave leaching step with chlorine gas injection into the atmospheric chlorine leach process. The process is shown schematically in Fig. 6. The two stages of the atmospheric chlorine leaching and cementation were conducted as described in Example 3, followed by a liquid-solid separation step. The solution from the liquid-solid separation through line (7) was taken for nickel recovery as was conducted in Example 3; the solids which were still high in nickel (15 wt.%) were fed (8) to an autoclave to be pressure leached at 4 atmospheres pressure with chlorine additions (1) and agitation. The temperature in the pressure leach step was 140-150°C. The duration of the pressure leach was two hours. The slurry from the autoclave was fed through line (9) to a second liquid-solid separation stage. The solution obtained (10) was returned to the atmospheric chlorine leach stage, a diluted bleed stream being taken to the chlorine- pressure leach autoclave to form a slurry with the solid residues from the first liquid-solid separation step. The residue from the chlorine-pressure leach (11) was treated for copper and precious metal recovery.

The composition of the solution and the residues fed to and obtained from the chlorine pressure leach autoclave are shown in TABLE 7. The residue obtained in the autoclave leach step was low in nickel and high in copper and was further treated for copper and precious metal recovery. The separated solution was relatively high in copper and hence was returned to the atmospheric chlorine leach stage. The high copper content may be due to the relatively high acidity and sulphate content formed during the chlorine pressure leaching stage.

Example 8

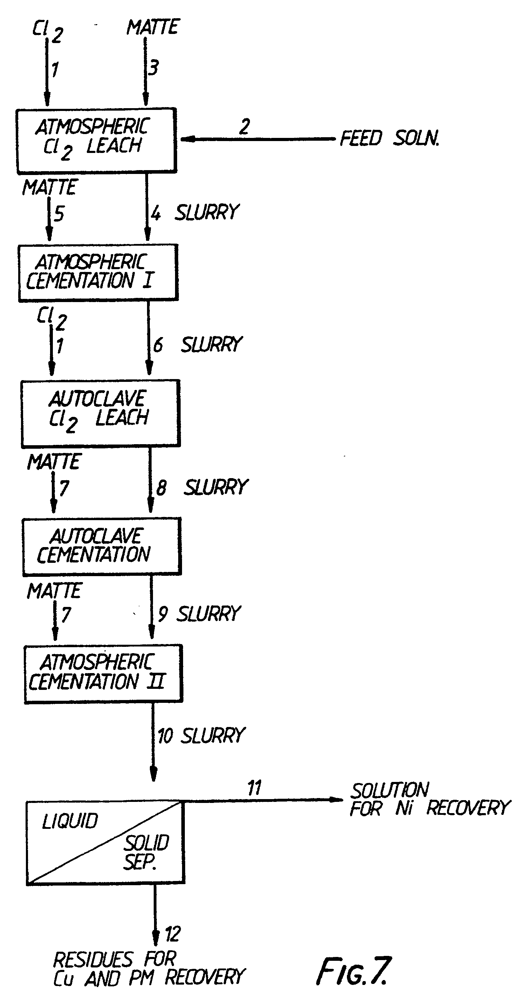

This process was a variation on the process described in Example 7, wherein the autoclave chlorine pressure leach stage followed directly the atmospheric chlorine leach and cementation stages without a liquid solid separation step. The autoclave chlorine pressure leach was followed by an autoclave cementation step and an atmospheric cementation step. The flow sheet of this process is shown in Fig. 7. The atmospheric chlorine leach and atmospheric cementation-I stages were conducted in a manner similar to Example 7. The slurry from the first cementation stage was fed through line (6) to an autoclave for a chlorine pressure leach step, with chlorine injection and agitation, at 4 atmospheres pressure and at a temperature range of 140-150°C. The redox potential in the autoclave was held between 300-320 mV measured against S.C.E. The slurry for the chlorine pressure leach was fed (8) to an autoclave cementation step with agitation, together with fresh untreated matte (7). Residence time in both autoclaves was 1.5 hours. The temperature in the second autoclave was also between 140-150°C and the pressure was 4 atmospheres. The redox potential measured against S.C.E. was found to be 230-360 mV. The autoclave cementation was followed by atmosphpric cementation-II, by feeding the autoclave cemented slurry through line (9) to an open cementation vessel. Untreated matte (7) was added at the same rate as in the autoclave cementation. The temperature of the slurry in the atmospheric cementation was 70°C. The redox potential was between 80-120 mV (S.C.E.) and the residence time was 1.5 hours. The slurry for the atmospheric cementation vessel was fed (10) to liquid-solid separation. The solution (11) was treated for nickel recovery and the residue (12) for copper and precious metal recovery.

TABLE 8 shows the composition of the various slurries fed to the autoclaves and to the second atmospheric cementation vessel, as well as the matte composition and its feed rate. The compositions of the separated solution and the separated residue are also shown. It can be seen that the solution could be treated directly for nickel and cobalt recovery after the iron having been removed if desired, as the copper content was negligible.

The residue had high copper content with the total nickel and cobalt retained being less than 6 wt.%.

Example 9

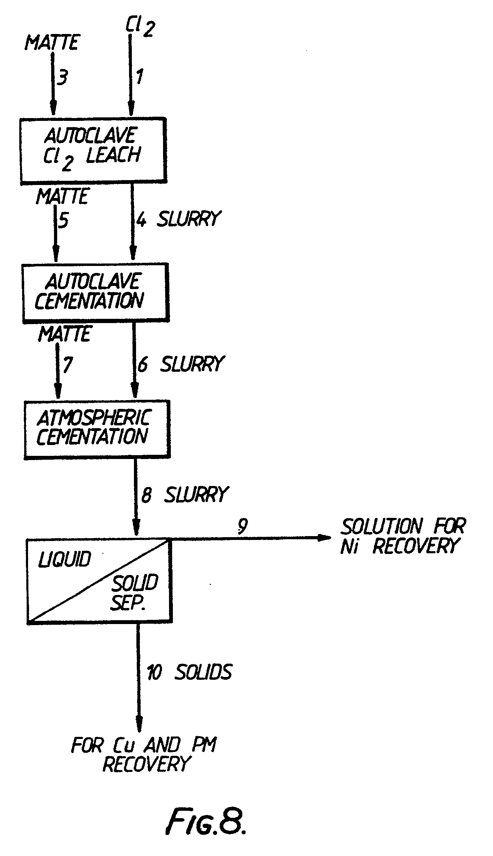

A simplified process based on the embodiment described in Example 8 is shown in Fig. 8. In this process, nickel and copper containing chloride solution was fed through line (2) to an autoclave with matte particles added (3) and leached in the presence of chlorine gas. The pressure inside the autoclave was 3-4 atmospheres and the temperature was between 140-150°C. The redox potential was controlled at 310-320 Mv (S.C.E.); the slurry had a residence time of 2 hours. The slurry was subsequently taken through line (4) to an autoclave cementation stage and then to an atmospheric cementation vessel through line (6). Untreated matte was added to both cementation stages through lines (5) and (7) respectively. The autoclave cementation was conducted at 3-4 atm. pressure, at the range of 140-150°C. The redox potential ranges of the slurry was 240-250 mV (S.C.E.) and the duration of the autoclave cementation was around 2 hours. The atmospheric cementation was carried out in an open vessel for 1.5 hours at 80°C and in a redox potential range of 50-110 mV (S.C.E.). The slurry from the atmospheric cementation (8) was subjected to liquid-solid separation, yielding a solution (9) with negligible copper content and a residue (10) with high copper content, and total nickel and cobalt content less than 6 wt.%.

The composition of the slurries in the various streams together with a final solution and residue compositions, are shown in TABLE 9.

The various embodiments of combining autoclave leaching with atmospheric chlorine leach and cementation process steps for the improved separation of nickel and cobalt, from copper contained in particles of sulphidic matte and sulphidic alloys, are described above. The objective of obtaining a solution to be treated for nickel and cobalt recovery with very low copper content can be attained in all the embodiments described. The nickel and cobalt retained in the separated copper and precious metals containing residue can be varied between 1-6 wt.% according to the requirements dictated by market conditions and extraction process costs.

Further embodiments will be readily apparent to those skilled in the art, the scope of the invention being defined in the appended claims.

TABLE 3

| Stream No | SOLUTION, CONC g/L | | | | | | | SOLIDS, WEIGHT % | | | | | Solid Feed or Removal Rate Kg/hr |
|---|---|---|---|---|---|---|---|---|---|---|---|---|---|
| | Ni | Co | Cu | Fe | SO$_4$ | Cl$^-$ | Flow Rate m$^3$/hr | Ni | Co | Cu | Fe | S | |
| 2 Feed | 70 | 1 | 20 | 1 | 19.0 | 95 | 25 | | | | | | |
| 3 Matte | | | | | | | | 39 | 1 | 33 | 2.5 | 23 | 6410 |
| 4 Slurry | 201 | 4.1 | 67.7 | 8 | 26 | 282 | 20 | 7 | 0.75 | 38 | 2.0 | 44 | 3317 |
| 5 Matte | | | | | | | | 39 | 1 | 33 | 2.5 | 23 | 4130 |
| 6 Slurry | | | | | | | | | | | | | |
| 7 Soln. | 232 | 4.8 | 0.2 | 9.8 | 26 | 282 | 20 | | | | | | |
| 8 Residue | | | | | | | | 15.0 | 0.63 | 48.9 | 1.66 | 29.6 | 8125 |

EP 0 248 518 B1

EP 0 248 518 B1

TABLE 4

| Stream NO | SOLUTION, CONC. g/L | | | | | | | | SOLIDS, WEIGHT % | | | | | |
|---|---|---|---|---|---|---|---|---|---|---|---|---|---|---|
| | Ni | Co | Cu | Fe | $SO_4$ | $Cl^-$ | HCl | Flow $m^3/hr$ | Ni | Co | Cu | Fe | S | Feed Rate Total Kg/hr |
| 4 Slurry | 258 | 4.2 | 39 | 4.2 | 27 | 320 | 5 | 0.1 | 10 | 0.83 | 39.5 | 2.9 | 39 | 17 |
| 5 Slurry | 260 | 5.0 | 4.5 | 6.0 | 29.3 | 311 | 3.5 | | 3.5 | 0.43 | 54.5 | 2.2 | 34.4 | |
| 3 Matte | | | | | | | | | 39 | 1 | 33 | 2.5 | 23 | 1.6 |
| 7 Soln | 254 | 4.6 | 0.08 | 6.0 | 27.6 | 300 | | | | | | | | |
| 8 Residue | | | | | | | | | 5.0 | 0.45 | 54.1 | 2.1 | 33.9 | 21 |

EP 0 248 518 B1

TABLE 5

| Stream No | SOLUTION, CONC. g/L | | | | | | | SOLIDS, WEIGHT % | | | | | |
|---|---|---|---|---|---|---|---|---|---|---|---|---|---|
| | Ni | Co | Cu | Fe | $SO_4$ | $Cl^-$ | Flow $m^3$/hr | Ni | Co | Cu | Fe | S | Feed Rate Kg/hr |
| 3 Matte | | | | | | | | 39 | 1 | 33 | 2.5 | 23 | |
| 2 Feed Soln. | 70 | 1 | 20 | 1 | 19 | 95 | | | | | | | |
| 6 Filt-rate | 230 | 4.8 | 5 | 9.8 | 26 | 280 | | | | | | | |
| 7 Residue | | | | | | | | 18 | | 47 | 1.5 | 30 | 475 |
| 1 Residue | | | | | | | | 1.1 | | 57 | 1.0 | 38 | 390 |
| 11 Filt-rate | 207 | | 12.5 | | | 250 | 1.4 | | | | | | |

TABLE 6

| Stream No | SOLUTION, CONC. g/L | | | | | | | | SOLIDS, WEIGHT % | | | | | |
|---|---|---|---|---|---|---|---|---|---|---|---|---|---|---|
| | Ni | Co | Cu | Fe | $SO_4$ | $Cl^-$ | HCl | Flow $m^3/hr$ | Ni | Co | Cu | Fe | S | Feed Rate Kg/hr |
| 4 | 228 | 5.2 | 68 | 4.6 | 26.4 | 264 | 2-5 | 0.1 | 6.5 | 0.58 | 37.5 | 2.3 | 44.9 | 19 |
| 3 Autoclave Cementation | | | | | | | | | 39 | 1 | 33 | 2.5 | 23 | Matte 6.5 |
| 5 | 240 | 5.8 | 18.2 | 6 | N/A | N/A | 3-6 | | 4.0 | 0.55 | 50.6 | 2.4 | 36.6 | |
| 3 Atm. Cementation | | | | | | | | | 39 | 1 | 33 | 2.5 | 23 | Matte 2.8 |
| 7 Soln. | 250 | 5.4 | 0.16 | 6 | 26.4 | | | | | | | | | ) ) |
| 8 Solids | | | | | | | | | 5.5 | 0.55 | 55.9 | 2.1 | 33.4 | ) 32 ) Total ) Weight to ) L/S |

EP 0 248 518 B1

TABLE 7

| Stream No | SOLUTION, CONC. g/L | | | | | | | | SOLIDS, WEIGHT % | | | | | |
|---|---|---|---|---|---|---|---|---|---|---|---|---|---|---|
| | Ni | Co | Cu | Fe | $SO_4$ | $Cl^-$ | HCl | Flow $m^3/hr$ | Ni | Co | Cu | Fe | S | Feed Rate Kg/hr |
| 8 Residue | | | | | | | | | 15 | 0.63 | 48.9 | 1.66 | 29.6 | 75 |
| 10 Solution | 171 | 4 | 55 | 9 | 33 | 240 | 5-10 | 0.1 | | | | | | |
| 11 Autoclave Leach Residue | | | | | | | | | 2 | 0.3 | 54.5 | 0.77 | 37.4 | 58.2 |

EP 0 248 518 B1

TABLE 8

| Stream No | SOLUTION, CONC. g/L | | | | | | | | SOLIDS, WEIGHT % | | | | | |
|---|---|---|---|---|---|---|---|---|---|---|---|---|---|---|
| | Ni | Co | Cu | Fe | $SO_4$ | $Cl^-$ | HCl | Flow $m^3$/hr | Ni | Co | Cu | Fe | S | Feed Rate Kg/hr |
| 6 Slurry | 188 | 5.2 | 0.03 | 3.8 | 23.2 | 230 | 4-8 | 0.1 | 22.3 | 0.80 | 43.8 | 1.9 | 26.2 | 23 |
| 8 Slurry | 250 | 6.8 | 18.8 | 5.2 | N/A | 306 | 2-5 | | 2.6 | 0.35 | 52.5 | 1.4 | 40.3 | 14.7 |
| 7 Matte | | | | | | | | | 39 | 1 | 33 | 2.5 | 23 | 3 |
| 9 Slurry | 266 | 7.4 | 4.0 | 6.0 | | 314 | 2 | | 3.5 | 0.33 | 56.3 | 1.5 | 33.5 | |
| 11 Soln. | 262 | 7.2 | 0.05 | 6.0 | | 310 | | 0.96 | | | | | | |
| 12 Solids | | | | | | | | | 5.4 | 0.34 | 56 | 1.5 | 33 | 22 |

EP 0 248 518 B1

TABLE 9

| Stream No | SOLUTION, CONC. g/L | | | | | | | SOLIDS, WEIGHT % | | | | | |
|---|---|---|---|---|---|---|---|---|---|---|---|---|---|
| | Ni | Co | Cu | Fe | $SO_4$ | $Cl^-$ | Flow $m^3$/hr | Ni | Co | Cu | Fe | S | Feed Rate Kg/hr |
| 2 Feed | 70 | 1 | 5 | 1 | 20 | 75 | 0.1 | | | | | | |
| 3 Matte | | | | | | | | 39 | 1 | 33 | 2.5 | 23 | 45.0 |
| 4 Slurry | 240 | 4.8 | 32 | 8.6 | 26.2 | 322 | 0.1 | 2.5 | 0.3 | 50 | 1.5 | 42 | 24. |
| 5 Matte | | | | | | | | 39 | 1 | 33 | 2.5 | 23 | 4.0 |
| 6 Slurry | 250 | 4.8 | 5 | 8.8 | 27 | 322 | 0.1 | 3.8 | 0.35 | 54 | 1.6 | 37 | 30 |
| 7 Matte | | | | | | | | 39 | 1 | 33 | 2.5 | 23 | 2.5 |
| 9 Soln. | 250 | 5 | 0.2 | 9 | 26 | 322 | 0.1 | | | | | | |
| 10 Solids | | | | | | | | 5.5 | 0.35 | 55 | 1.6 | 36 | |

EP 0 248 518 B1

## Claims

1. A process for the separation of nickel from copper contained in solid particles of a copper- and-nickel-containing ground sulphidic matte or sulphidic alloy, wherein said particles, after being slurried in an acidic solution, are chlorine leached at ambient atmospheric pressure to provide a chlorine leached slurry of sulphidic particles in a chloride solution, additional unleached solid particles of copper- and nickel-containing ground sulphidic matte or sulphidic alloy are added to the chlorine leached slurry to cement out copper dissolved in the chloride solution, the copper depleted chloride solution is separated and the residue treated for copper recovery, characterized in that the process includes the step of subjecting the chlorine leached slurry to a chlorine leaching conducted in an autoclave at over-atmospheric pressure, in the presence of chlorine gas and air, at a pH less than 4 and at a temperature higher than 110°C, providing nickel impoverished copper sulphide containing particles slurried in a nickel enriched chloride solution.

2. A process according to claim 1, wherein the separated chloride solution is treated for nickel recovery.

3. A process according to claim 1 or claim 2, wherein said solid particles also contain precious metals which are subsequently recovered from the leach residue.

4. A process according to claim 1, wherein the cementation of the dissolved copper in the chloride solution onto freshly added particles is carried out in an autoclave at over-atmospheric pressure and at a temperature higher than 110°C.

5. A process according to claim 2, wherein said solid particles also contain cobalt, which is dissolved together with said nickel in said chloride solution, and is subsequently recovered from said solution.

6. A process according to claim 1, wherein a chlorine and oxygen bearing gas is injected into said autoclave during the second chlorine leaching of said slurry at over-atmospheric pressure.

7. A process according to claim 2 conducted in a batch mode.

8. A process according to claim 2 conducted in a continuous mode.

9. A process for the separation of nickel from nickel- and copper-containing solid particles of ground sulphidic matte or sulphidic alloy comprising the steps of slurrying, in an acidic solution, material containing ground sulphidic matte or sulphidic alloy containing nickel and copper, thereafter leaching solid particles so obtained in the presence of gaseous chlorine at atmospheric pressure at a redox potential selected to be within the range favouring dissolution of nickel over copper in said acidic solution, maintaining said redox potential by controlling the feed rate of said ground sulphidic solid particles in conjunction with the addition of said chlorine gas, subjecting the chlorine leached particles slurried in a predominantly nickel chloride-containing solution to further chlorine leaching in an autoclave at above-atmospheric pressure, at a pH less than 4 and at a temperature in excess of 110°C, reacting the chlorine pressure leached slurry from said autoclave with additional unleached solid particles of ground sulphidic matte or sulphidic alloy containing nickel and copper to cement out copper dissolved in the nickel chloride- containing solution of said slurry, subjecting the slurry of sulphidic particles in the copper depleted nickel chloride-containing solution to liquid-solid separation to obtain a purified nickel chloride-containing solution and a residue containing copper sulphide and residual nickel sulphide, and treating the separated nickel chloride-containing solution for nickel recovery and said copper sulphidic residue for copper recovery.

10. A process according to claim 9, wherein unleached ground solid particles containing nickel and copper, are added to the chlorine pressure leached slurry in said autoclave for cementing out copper dissolved in said nickel chloride containing solution at over-atmospheric pressure and at a temperature higher than 110°C.

11. A process for the separation of nickel from nickel- and copper-containing solid particles of ground sulphidic matte or sulphidic alloy, comprising the steps of slurrying in an acidic solution solid particles of ground sulphidic matte or sulphidic alloy containing nickel and copper, thereafter first leaching said particles, in the presence of chlorine gas at atmospheric pressure, at a redox potential selected to be within the range favouring dissolution of nickel over copper in said acidic solution, maintaining said redox potential by controlling the addition of said chlorine gas in conjunction with the feed rate of said sulphidic solid particles, thereafter adding additional unleached nickel- and copper-containing ground solid sulphidic particles to said first leached slurry and obtaining leached nickel impoverished sulphidic particles slurried in a first predominantly nickel chloride-containing solution, separating the nickel chloride-containing solution and recovering nickel from said solution, transferring the nickel impoverished sulphidic particles separated from said first nickel chloride-containing solution to an autoclave and adding a second acidic solution thereto to form an aqueous slurry, subjecting said aqueous slurry in said autoclave to a second leaching with additions of chlorine gas at above-atmospheric pressure, at a pH less than 4 and a temperature in excess of 110°C, to yield a slurry of substantially nickel-free copper sulphide containing particles in a second nickel chloride-containing solution, separating the second nickel chloride-containing solution and returning it to said first atmospheric leaching step, and treating the substantially nickel-free copper sulphide containing residue for copper recovery.

12. A process for the separation of nickel from nickel and copper-containing solid particles of ground sulphidic matte or sulphidic alloy, comprising the steps of first leaching solid particles of ground sulphidic matte or sulphidic alloy containing nickel and copper, slurried in an acidic solution, in the presence of chlorine gas at atmospheric pressure, at a redox potential selected to favour nickel dissolution over copper dissolution in said acidic solution, maintaining said redox potential by controlling the addition of said chlorine gas with respect to the feed rate of said sulphidic solid particles, thereafter adding a second charge of unleached nickel- and copper- containing ground solid sulphidic particles to cement out copper dissolved in the solution in said first atmospheric chlorine leaching, thereby obtaining nickel impoverished sulphidic particles slurried in an acidic predominantly nickel chloride-containing solution, subjecting the slurry obtained in the cementation step to a second leaching with further injection of chlorine gas in an autoclave at above-atmospheric pressure, at a pH less than 4 and a temperature in excess of 110°C to provide a chlorine-pressure leached slurry, thereafter adding a third charge of unleached nickel- and copper-containing ground solid sulphidic particles to said chlorine-pressure leached slurry and reacting the resulting mixture at above-atmospheric pressure, at a pH less than 4, and at a temperature in excess of 110°C, to yield pressure-treated sulphidic particles impoverished in nickel and slurried in a nickel enriched chloride solution, reacting said nickel impoverished pressure treated sulphidic particles slurried in nickel enriched chloride solution with a fourth charge of unleached nickel- and copper-containing ground sulphidic particles at atmospheric pressure to cement dissolved copper onto said unleached ground solid sulphidic particles, subjecting the slurry to liquid-solid separation to obtain a purified nickel chloride-containing solution and a residue containing copper sulphide, treating said purified nickel chloride-containing solution for the recovery of nickel, and treating said residue for the recovery of copper.

13. A process according to any one of claims 9 to 12, wherein the nickel and copper containing sulphidic particles also contain cobalt which is dissolved with the nickel and is retained in, and subsequently recovered from the separated nickel chloride-containing solution.

14. A process according to any one of claims 9 to 12, wherein the nickel and copper containing sulphidic particles also contain precious metals which are retained in, and subsequently recovered from the separated copper sulphide containing residue.

## Patentansprüche

1. Verfahren zur Trennung von Nickel und von Kupfer, welche in festen Teilchen eines Kupfer und Nickel enthaltenden gemahlenen sulfidischen Steines oder einer sulfidischen Liegerung enthalten sind, wobei die Teilchen, nachdem sie in einer sauren Lösung aufgeschlemmt wurden, bei Umgebungsdruck mit Chlor ausgelaugt werden, um eine mit Chlor ausgelaugte Aufschlämmung von sulfidischen Teilchen in einer Chloridlösung zu bereiten, zusätzliche nicht ausgelaugte feste Teilchen eines Kupfer und Nickel enthaltenden gemahlenen sulfidischen Steines oder sulfidischer Legierung zu der mit Chlor ausgelaugten Aufschlämmung hinzugefügt werden, um das in der Chloridlösung aufgelöste Kupfer auszuzementieren bzw. auszufällen, die kupferabgereicherte Chloridlösung abgetrennt und der Rückstand zur Kupfergewinnung behandelt wird, dadurch **gekennzeichnet**, daß das Verfahren eine Stufe enthält, in der die mit Chlor ausgelaugte Aufschlämmung einer Auslaugung mit Chlor unterworfen wird, welche in einem Autoklaven bei gegenüber dem Atmosphärendruck erhöhten Druck in Anwesenheit von Chlorgas und Luft bei einem pH-Wert von weniger als 4 und einer 110 °C überschreitenden Temperatur durchgeführt wird, um an Nickel verarmte Kupfersulfid enthaltende Teilchen, aufgeschlämmt in einer mit Nickel angereicherten Chloridlösung, zur Verfügung zu stellen.

2. Verfahren nach Anspruch 1, in welchem die abgetrennte Chloridlösung zur Nickelgewinnung behandelt wird.

3. Verfahren nach Anspruch 1 oder 2, in welchem die festen Teilchen zusätzlich Edelmetalle enthalten, welche anschließend aus dem Auslaugungsrückstand gewonnen werden.

4. Verfahren nach Anspruch 1, in welchem die Auszementierung des in der Chloridlösung aufgelösten Kupfers auf frisch hinzugefügten Teilchen in einem Autoklaven bei einem gegenüber dem Atmosphärendruck erhöhten Druck und einer 110 °C übersteigenden Temperatur durchgeführt wird.

5. Verfahren nach Anspruch 2, in welchem die festen Teilchen zusätzlich Kobalt enthalten, welches zusammen mit Nickel in der Chloridlösung aufgelöst wird und anschließend aus der Lösung gewonnen wird.

6. Verfahren nach Anspruch 1, in welchem ein Chlor und Sauerstoff enthaltendes Gas in den Autoklaven eingeleitet wird während des zweiten Auslaugens der Aufschlämmung mit Chlor bei einer gegenüber dem Atmosphärendruck erhöhten Druck.

7. Verfahren nach Anspruch 2, welches absatzweise durchgeführt wird.

8. Verfahren nach Anspruch 2, welches kontinuierlich durchgeführt wird.

9. Verfahren zur Trennung von Nickel von Nickel und Kupfer enthaltenen festen Teilchen eines gemahlenen sulfidischen Steines oder einer sulfidischen Legierung, umfassend die folgenden Stufen: Aufschlämmen eines Materials in einer sauren Lösung, wobei das Material Nickel und Kupfer enthaltenden gemahlenen Stein oder sulfidische Legierung enthält, anschließendes Auslaugen der so erhaltenen festen Teilchen in Anwesenheit von Chlorgas bei Atmosphärendruck und einem Redoxpotential, welches in einem solchen Bereich ausgewählt wird, daß die Auflösung von Nickel gegenüber Kupfer in der sauren Lösung begünstigt wird, Beibehalten des Redoxpotentials durch Steuerung der Zufuhrrate der gemahlenen sulfidischen festen Teilchen zusammen mit der Zugabe von Chlorgas, Aussetzen der mit Chlor ausgelaugten, in einer überwiegend Nickelchlorid enthaltenden Lösung aufgeschlämmten Teilchen einer weiteren Auslaugung mit Chlor in einem Autoklaven bei einem gegenüber dem Atmosphärendruck erhöhten Druck, einem pH-Wert von weniger als 4 und einer 110 °C überschreitenden Temperatur, Umsetzen der mit Chlor unter Druck ausgelaugten Aufschlämmung aus dem Autoklaven mit zusätzlichen nicht ausgelaugten festen Teilchen aus Nickel und Kupfer enthaltenden gemahlenem sulfidischen Stein oder sulfidischer Legierung, um das in der Nickelchlorid enthaltenden Lösung der Aufschlämmung aufgelöste Kupfer auszuzementieren, Aussetzen der Aufschlämmung von sulfidischen Teilchen der von kupferabgereicherten Nickelchlorid enthaltenden Lösung einer Flüssig-Fest-Trennung, um eine gereinigte Nickelchlorid enthaltende Lösung, einen Kupfersulfid enthaltenden Rückstand und zurückbleibendes Nickelsulfid zu erhalten, und Behandeln der abgetrennten Nickelchlorid enthaltenden Lösung zur Nickelgewinnung und des Kupfersulfidrückstandes zur Kupfergewinnung.

10. Verfahren nach Anspruch 9, in welchem nicht ausgelaugte gemahlene feste Teilchen, die Nickel und Kupfer enthalten zu der unter Druck mit Chlor ausgelaugten Aufschlämmung in den Autoklaven hinzugefügt werden, um das in der Nickelchlorid enthaltenden Lösung aufgelöste Kupfer bei einem gegenüber dem Atmosphärendruck erhöhten Druck und einer 110 °C übersteigenden Temperatur auszuzementieren.

11. Verfahren zur Trennung von Nickel von Nickel und Kupfer enthaltenden festen Teilchen eines gemahlenen sulfidischen Steines oder einer sulfidischen Legierung, umfassend die folgenden Stufen: Aufschlämmen von festen Teilchen aus Nickel und Kupfer enthaltenden gemahlenem sulfidischen Stein oder sulfidischer Legierung in einer sauren Lösung, anschließendes erstes Auslaugen dieser Teilchen in Anwesenheit von Chlorgas bei Atmosphärendruck und einem Redoxpotential, welches in einem solchen Bereich ausgewählt wird, daß die Auflösung von Nickel gegenüber Kupfer in der sauren Lösung begünstigt wird, Beibehalten des Redoxpotentials durch Steuerung der Zugabe von Chlorgas zusammen mit der Zufuhrrate der sulfidischen festen Teilchen, anschließenden Hinzufügen von zusätzlichen nicht ausgelaugten Nickel und Kupfer enthaltenden gemahlenen festen sulfidischen Teilchen zu der ersten ausgelaugten Aufschlämmung und Erhalten von ausgelaugten an Nickel verarmten sulfidischen Teilchen, aufgeschlämmt in einer ersten, überwiegend Nickelchlorid enthaltenden Lösung, Abtrennen der Nickelchlorid enthaltenden Lösung und Gewinnen des Nickels aus der Lösung, Übertragen der an Nickel verarmten sulfidischen Teilchen, welche von der ersten Nickelchlorid enthaltenden Lösung abgetrennt sind, in einen Autoklaven und Hinzufügen einer zweiten sauren Lösung, um eine wäßrige Aufschlämmung zu bilden, Aussetzen dieser im Autoklaven befindlichen wäßrigen Aufschlämmung einer zweiten Auslaugung unter Zugabe von Chlorgas bei einem gegenüber dem Atmosphärendruck erhöhten Druck, einem pH-Wert von weniger als 4 und einer 110 °C übersteigenden Temperatur, um eine Aufschlämmung von im wesentlichen nickelfreien Kupfersulfid enthaltenden Teilchen in einer zweiten Nickelchlorid enthaltenden Lösung zu erzielen, Abtrennen der zweiten Nickelchlorid enthaltenden Lösung und Zurückführen derselben zu der ersten atmosphärischen Auslaugungsstufe, und Behandeln des im wesentlichen nickelfreien Kupfersulfid enthaltenden Rückstandes zur Kupfergewinnung.

12. Verfahren zur Trennung von Nickel von Nickel und Kupfer enthaltenden festen Teilchen eines gemahlenen sulfidischen Steines oder einer sulfidischen Legierung, umfassend die folgenden Stufen: erstes Auslaugen von festen Teilchen eines Nickel und Kupfer enthaltenden gemahlenen sulfidischen Steines oder einer sulfidischen Legierung, welche in einer sauren Lösung aufgeschlämmt sind, in der Anwesenheit von Chlorgas unter Atmosphärendruck, und einem Redoxpotential, welches so ausgewählt wird, daß es die Auflösung von Nickel gegenüber der Auflösung von Kupfer in der sauren Lösung begünstigt, Beibehalten des Redoxpotentials durch Steuerung der Zugabe von Chlorgas im Hinblick auf die Zufuhrrate der sulfidischen festen Teilchen, anschließendes Hinzufügen einer zweiten Beschickung von nicht ausgelaugtem Nickel und Kupfer enthaltenden gemahlenen sulfidischen festen Teilchen, um das Kupfer auszuzementieren, welches in der Lösung während des ersten atmosphärischen Auslaugens mit Chlor aufgelöst wurde, um auf diese Weise von an Nickel verarmten sulfidischen Teilchen, aufgeschlämmt in einer sauren, überwiegend Nickelchlorid enthaltenden Lösung, zu erhalten, Aussetzen der während der Zementierungsstufe erhaltenen Aufschlämmung einer zweiten Auslaugung unter weiterem Einleiten von Chlorgas in einem Autoklaven bei einem gegenüber dem Atmosphärendruck erhöhten Druck, einem pH-Wert von weniger als 4 und einer 110 °C übersteigenden Temperatur, um eine mit Chlor unter Druck ausgelaugte Aufschlämmung zu bereiten, anschließendes Hinzufügen einer drit-

EP 0 248 518 B1

ten Beschickung von nicht ausgelaugten Nickel und Kupfer enthaltenden gemahlenen festen sulfidischen Teilchen zu der mit Chlor unter Druck ausgelaugten Aufschlämmung und Umsetzen der erhaltenen Mischung bei einem gegenüber dem Atmosphärendruck erhöhten Druck, einem pH-Wert von weniger als 4 und einer 110 °C übersteigenden Temperatur, um druckbehandelte sulfidische Teilchen zu erhalten, welche an Nickel verarmt sind und in einer mit Nickel angereicherten Chloridlösung aufgeschlämmt sind, Umsetzen der an Nickel verarmten, druckbehandelten sulfidischen Teilchen, welche in der mit Nickel angereicherten Chloridlösung aufgeschlämmt sind, mit einer vierten Beschickung von nicht ausgelaugten Nickel und Kupfer enthaltenden gemahlenen sulfidischen Teilchen unter Atmosphärendruck, um das aufgelöste Kupfer auf den nicht ausgelaugten gemahlenen festen sulfidischen Teilchen auszuzementieren, Aussetzen der Aufschlämmung einer Flüssig-Fest-Trennung, um eine gereinigte Nickelchlorid enthaltende Lösung und einen Kupfersulfid enthaltenden Rückstand zu erhalten, Behandeln der gereinigten Nickelchlorid enthaltenden Lösung zur Nickelgewinnung, und Behandeln des Rückstands zur Kupfergewinnung.

13. Verfahren nach einem der Ansprüche 9 bis 12, in welchem die Nickel und Kupfer enthaltenden sulfidischen Teilchen zusätzlich Kobalt enthalten, welches mit dem Nickel aufgelöst wird und in der Nickelchloridlösung verbleibt und anschließend daraus gewonnen wird.

14. Verfahren nach einem der Ansprüche 9 bis 12, in welchem die Nickel und Kupfer enthaltenden sulfidischen Teilchen zusätzlich Edelmetalle enthalten, welche in dem Kupfersulfid enthaltenden Rückstand verbleiben und anschließend daraus gewonnen werden.

**Revendications**

1. Procédé pour la séparation du nickel du cuivre contenu dans des particules solides d'une matte sulfurée ou d'un alliage sulfuré broyé contenant du cuivre et du nickel, dans lequel ces particules, après avoir été délayées dans une solution acide, sont lessivées au chlore à la pression atmosphérique ambiante pour former une pâte lessivée au chlore de particules sulfurées dans une solution de chlorure, des particules solides, non lessivées, additionnelles de matte sulfurée ou d'alliage sulfuré broyé contenant du cuivre et du nickel sont ajoutées à la pâte lessivée au chlore pour cémenter le cuivre dissous dans la solution de chlorure, la solution de chlorure appauvrie en cuivre est séparée et le résidu est traité pour la récupération du cuivre, caractérisé en ce que le procédé comprend l'étape de traitement de la pâte lessivée au chlore par un lessivage au chlore réalisé dans un autoclave à une pression supérieure à la pression atmosphérique, en présence de gaz de chlore et d'air, à un pH inférieur à 4 et à une température supérieure à 110°C, en formant des particules contenant du sulfure de cuivre appauvries en nickel délayées dans une solution de chlorure enrichie en nickel.

2. Procédé suivant la revendication 1, caractérisé en ce que la solution de chlorure séparée est traitée pour la récupération du nickel.

3. Procédé suivant l'une ou l'autre des revendications 1 et 2, caractérisé en ce que les particules solides contiennent également des métaux précieux qui sont ensuite récupérés à partir du résidu de lessivage.

4. Procédé suivant la revendication 1, caractérisé en ce que la cémentation du cuivre dissous dans la solution de chlorure sur des particules fraîchement ajoutées est réalisée dans un autoclave à une pression supérieure à la pression atmosphérique et à une température supérieure à 110°C.

5. Procédé suivant la revendication 2, caractérisé en ce que les particules solides contiennent également du cobalt, qui est dissous en même temps que le nickel dans la solution de chlorure, et est ensuite récupéré à partir de cette solution.

6. Procédé suivant la revendication 1, caractérisé en ce qu'un gaz contenant du chlore et de l'oxygène est injecté dans l'autoclave au cours du second lessivage au chlore de la pâte à une pression supérieure à la pression atmosphérique.

7. Procédé suivant la revendication 2, réalisé selon un mode discontinu.

8. Procédé suivant la revendication 2, réalisé suivant un mode continu.

9. Procédé pour la séparation du nickel de particules solides contenant du nickel et du cuivre d'une matte sulfurée ou d'un alliage sulfuré broyé, comprenant les étapes suivantes : délayer, dans une solution acide, une matière contenant une matte sulfurée ou un alliage sulfuré broyé contenant du nickel et du cuivre, ensuite lessiver les particules solides ainsi obtenues en présence de chlore gazeux à la pression atmosphérique à un potentiel redox choisi pour être dans l'intervalle favorisant la dissolution du nickel par rapport au cuivre dans la solution acide, maintenir ce potentiel redox en contrôlant le débit des particules solides sulfurées broyées en même temps que l'addition du gaz de chlore, soumettre les particules lessivées au chlore délayées dans une solution contenant du chlorure de nickel en prédominance à un nouveau lessivage au chlore dans un autoclave à une pression supérieure à la pression atmosphérique, à un pH inférieur à 4 et à une température excédant 110°C, faire réagir la pâte lessivée sous pression de chlore provenant de l'autoclave avec des particules

19

solides non lessivées, additionnelles de matte sulfurée ou d'alliage sulfuré broyé contenant du nickel et du cuivre pour cémenter le cuivre dissous dans la solution contenant du chlorure de nickel de la pâte, soumettre la pâte de particules sulfurées dans la solution contenant du chlorure de nickel épuisée en cuivre à une séparation liquide-solide pour obtenir une solution contenant du chlorure de nickel purifiée et un résidu contenant du sulfure de cuivre et du sulfure de nickel résiduel, et traiter la solution contenant du chlorure de nickel séparée pour la récupération du nickel et le résidu sulfuré de cuivre pour la récupération du cuivre.

10. Procédé suivant la revendication 9, caractérisé en ce que des particules solides broyées non lessivées contenant du nickel et du cuivre, sont ajoutées à la pâte lessivée sous pression de chlore dans l'autoclave pour cémenter le cuivre dissous dans la solution contenant du chlorure de nickel à une pression supérieure à la pression atmosphérique et à une température supérieure à 110°C.

11. Procédé pour la séparation du nickel de particules solides contenant du nickel et du cuivre d'une matte sulfurée ou d'un alliage sulfuré broyé, comprenant les étapes suivantes : le délayage dans une solution acide de particules solides de matte sulfurée ou d'alliage sulfuré broyé contenant du nickel et du cuivre, ensuite un premier lessivage de ces particules, en présence de gaz de chlore à la pression atmosphérique, à un potentiel redox choisi dans l'intervalle favorisant la dissolution du nickel par rapport au cuivre dans la solution acide précitée, le maintien de ce potentiel redox en contrôlant l'addition du gaz de chlore conjointement au débit des particules solides sulfurées, ensuite l'addition de particules sulfurées solides, broyées contenant du nickel et du cuivre, non lessivées, additionnelles à la première pâte lessivée et l'obtention de particules sulfurées appauvries en nickel, lessivées dans une première solution contenant en prédominance du chlorure de nickel, la séparation de la solution contenant du chlorure de nickel et la récupération du nickel de cette solution, le transfert des particules sulfurées appauvries en nickel séparées de la première solution contenant du chlorure de nickel dans un autoclave et l'addition à celle-ci d'une seconde solution acide pour former une pâte aqueuse, le traitement de cette pâte aqueuse dans l'autoclave par un second lessivage avec des additions de gaz de chlore à une pression supérieure à la pression atmosphérique, à un pH inférieur à 4 et une température excédant 110°C, pour donner une pâte de particules contenant du sulfure de cuivre pratiquement exemptes de nickel dans une seconde solution contenant du chlorure de nickel, la séparation de la seconde solution contenant du chlorure de nickel et le renvoi de celle-ci à la première étape de lessivage atmosphérique, et le traitement du résidu contenant du sulfure de cuivre pratiquement exempt de nickel pour la récupération du cuivre.

12. Procédé pour la séparation du nickel de particules solides contenant du nickel et du cuivre d'une matte sulfurée ou d'un alliage sulfuré broyé, comprenant les étapes suivantes : un premier lessivage de particules solides de matte sulfurée ou d'alliage sulfuré broyé contenant du nickel et du cuivre, délayées dans une solution acide, en présence de gaz de chlore à la pression atmosphérique, à un potentiel redox choisi pour favoriser la dissolution du nickel par rapport à la dissolution du cuivre dans la solution acide, le maintien du potentiel redox en contrôlant l'addition du gaz de chlore par rapport au débit des particules solides sulfurées, ensuite l'addition d'une seconde charge de particules sulfurées solides, broyées contenant du nickel et du cuivre, non lessivées pour cémenter le cuivre dissous dans la solution du premier lessivage au chlore atmosphérique, en obtenant ainsi des particules sulfurées appauvries en nickel délayées dans une solution contenant du chlorure de nickel en prédominance, acide, le traitement de la pâte obtenue dans l'étape de cémentation par un second lessivage avec une nouvelle injection de gaz de chlore dans un autoclave à une pression supérieure à la pression atmosphérique, à un pH inférieur à 4 et une température excédant 110°C pour obtenir une pâte lessivée sous pression de chlore, ensuite l'addition d'une troisième charge de particules sulfurées solides, broyées contenant du nickel et du cuivre, non lessivées à la pâte lessivée sous pression de chlore et la réaction du mélange résultant à une pression supérieure à la pression atmosphérique, à un pH inférieur à 4 et à une température excédant 110°C, pour donner des particules sulfurées traitées sous pression appauvries en nickel et délayées dans une solution de chlorure enrichie en nickel, la réaction des particules sulfurées traitées sous pression, appauvries en nickel dans une solution de chlorure enrichie en nickel avec une quatrième charge de particules sulfurées, broyées contenant du nickel et du cuivre, non lessivées à la pression atmosphérique pour cémenter le cuivre dissous sur lesdites particules sulfurées solides, broyées, non lessivées, le traitement de la pâte par une séparation liquide-solide pour obtenir une solution purifiée contenant du chlorure de nickel et un résidu contenant du sulfure de cuivre, le traitement de la solution purifiée contenant du chlorure de nickel pour la récupération du nickel, et le traitement du résidu pour la récupération du cuivre.

13. Procédé suivant l'une quelconque des revendications 9 à 12, caractérisé en ce que les particules sulfurées contenant du nickel et du cuivre contiennent également du cobalt, qui est dissous avec le nickel et est retenu dans la solution séparée contenant du chlorure de nickel et ensuite récupéré à partir de celle-ci.

14. Procédé suivant l'une quelconque des revendications 9 à 12, caractérisé en ce que les particules sulfurées contenant du nickel et du cuivre contiennent également des métaux précieux, qui sont retenus dans le résidu séparé contenant du sulfure de cuivre et ensuite récupérés à partir de celui-ci.

wt % Ni IN LEACHED RESIDUE AS
A FUNCTION OF REACTION TIME
IN THE AUTOCLAVE AT 150°C

Fig.Ia.

RATE OF Ni REMOVAL FROM THE
RESIDUE AS A FUNCTION OF THE
RATE OF $Cl_2$ ADDITION
T=150°C

Fig.Ib.

MATTE     $Cl_2$ GAS

ATM. LEACH mV· CONTROL

2 — FEED SOLN.

4 SLURRY

MATTE

ATM. CEMENT

6 SLURRY

LIQUID

SOLID SEP.

7 — SOLUTION FOR Ni AND CO RECOVERY

8

RESIDUE FOR Cu AND PM RECOVERY

**FIG.2.**

MATTE      Cl$_2$

3      1

ATMOSPHERIC
Cl$_2$ LEACH    ←— 2 —— FEED SOLN.

SLURRY 4

AUTOCLAVE
PRESSURE
LEACH

MATTE

SLURRY 5

3

ATMOSPHERIC
CEMENTATION

SLURRY 6

LIQUID / SOLID SEP. —— 7 —→ SOLUTION FOR Ni RECOVERY

8

RESIDUE FOR
Cu AND PM
RECOVERY

FIG. 3.

FIG.4.

FIG.5.

FIG.6.

FIG.7.

MATTE  $Cl_2$

3   1

```
┌──────────────┐
│  AUTOCLAVE   │
│  Cl 2  LEACH │
└──────────────┘
```

MATTE

5   4 SLURRY

```
┌──────────────┐
│  AUTOCLAVE   │
│  CEMENTATION │
└──────────────┘
```

MATTE

7   6 SLURRY

```
┌──────────────┐
│ ATMOSPHERIC  │
│ CEMENTATION  │
└──────────────┘
```

8 SLURRY

9  SOLUTION FOR
Ni RECOVERY

```
┌──────────────┐
│ LIQUID       │
│      SOLID   │
│      SEP.    │
└──────────────┘
```

10 SOLIDS

FOR Cu AND PM
RECOVERY

*FIG.8.*